(19) Europäisches Patentamt
European Patent Office
Office européen des brevets

(11) Numéro de publication : **0 461 976 A1**

# (12) DEMANDE DE BREVET EUROPEEN

(21) Numéro de dépôt : **91401516.9**

(22) Date de dépôt : **10.06.91**

(51) Int. Cl.[5] : **C07F 9/09**, C08K 5/49, C07F 9/165

(30) Priorité : **14.06.90 FR 9007438**

(43) Date de publication de la demande : **18.12.91 Bulletin 91/51**

(84) Etats contractants désignés : **AT BE CH DE DK ES FR GB GR IT LI LU NL SE**

(71) Demandeur : **ATOCHEM**
**4, Cours Michelet La Défense 10 Cédex 42**
**F-92091 Paris La Défense (FR)**

(72) Inventeur : **Cerf, Martine**
**2, rue C. Psitser**
**F-57000 Metz (FR)**
Inventeur : **Mieloszynski, Jean-Luc**
**286, rue de Pont-à-Mousson**
**F-57158 Montigny les Metz (FR)**
Inventeur : **Paquer, Daniel**
**2, rue d'Anvers**
**F-54500 Vandoeuvre (FR)**

(54) **Composés acryliques phosphores, leur procédé de fabrication et nouveaux polymères en dérivant.**

(57) Ces composés acryliques et méthacryliques sont choisis parmi ceux de formule :

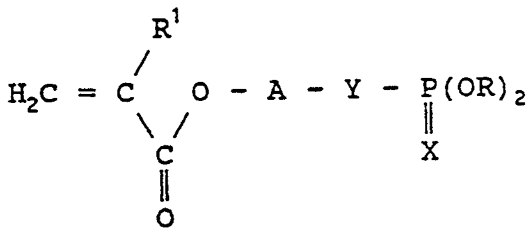

(I)

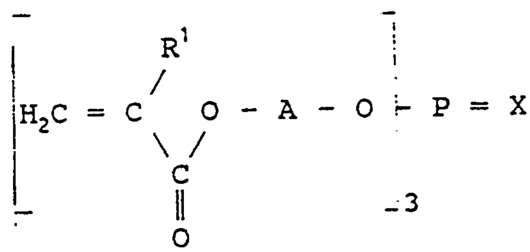

(II)

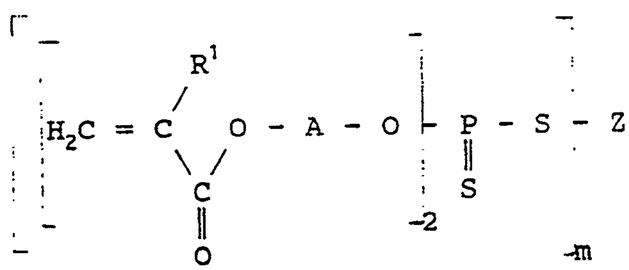

(III)

dans lesquelles $R^1$ = H ou $CH_3$ ; A = $(CH_2)n$ où n = entier de 2 à 12 ou $-(CH_2CH_2O)_d-CH_2CH_2-$, d = entier de 1 à 20 ; X = S ou O ; Y = S ou O, avec la condition que X = S et Y = O lorsque A = $-(CH_2CH_2O)_d-CH_2CH_2-$ ; R = alkyle en $C_1$-$C_{20}$ ou $-(CH_2)_pSR^3$ où p = entier de 3 à 12 et $R^3$ = alkyle en $C_1$-$C_{20}$ ; m, entier de 1 à 3 ; et Z = H, $R^2QH$, où $R^2$ = alkyle en $C_2$-$C_{12}$ et Q = O ou S, et les atomes des métaux des groupes IA, IIA, IIIA, IB, IIB, VIB, VIIB et VIII de la Classification Périodique,
avec la condition que Z = H ou $R^2OH$ lorsque m = 1 et que m est la valence de Z lorsque Z est un métal.

EP 0 461 976 A1

La présente invention se rapporte à de nouveaux acrylates et méthacrylates comprenant au moins un atome de phosphore et au moins un autre hétéroatome, à un procédé pour leur fabrication, à l'obtention de nouveaux polymères et copolymères à partir desdits acrylates et méthacrylates, ainsi qu'à des composés organiques comprenant au moins un atome de phosphore et au moins un atome de soufre utiles comme intermédiaires dans la synthèse desdits acrylates et méthacrylates.

On connaît déjà dans la littérature scientifique et industrielle de nombreux composés acryliques et méthacryliques porteurs de fonctions telles que halogène, hydroxyle, thiol, époxyde, etc. Chacune de ces familles de composés a déjà trouvé dans différentes industries, en raison de la facilité de polymérisation de la double liaison acrylique, des applications variées. Jusqu'à ce jour toutefois, la littérature scientifique et industrielle a donné peu d'exemples de composés acryliques et méthacryliques porteurs simultanément d'au moins un atome de phosphore et d'au moins un atome de soufre. En raison des particularités de comportement chimique que l'on peut attendre de la présence de tels atomes dans un composé acrylique ou méthacrylique, le but visé par la présente invention consiste donc à explorer ce nouveau domaine de la chimie et à déterminer les conditions de synthèse de tels composés.

Un premier objet de la présente invention concerne donc des composés acryliques et méthacryliques choisis parmi ceux de formule :

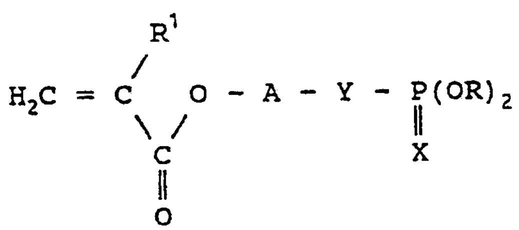

(I)

dans laquelle :

– $R^1$ est choisi parmi l'atome d'hydrogène et le radical méthyle,

– A est choisi parmi les radicaux $(CH_2)_n$ pour lesquels n est un nombre entier de 2 à 12 et le radical -$(CH_2CH_2O)_d$-$CH_2CH_2$-, d étant un nombre entier allant de 1 à 20,

– X est choisi parmi les atomes de soufre et d'oxygène,

– Y est choisi parmi les atomes de soufre et d'oxygène,

avec la condition que X est un atome de soufre et Y est un atome d'oxygène lorsque A est le radical -$(CH_2CH_2O)_d$-$CH_2CH_2$-, et

– R est choisi parmi les radicaux alkyle ayant de 1 à 20 atomes de carbone et les groupes -$(CH_2)_pSR^3$ dans lesquels p est un nombre entier allant de 3 à 12 et $R^3$ est un radical alkyle ayant de 1 à 20 atomes de carbone,

ceux de formule :

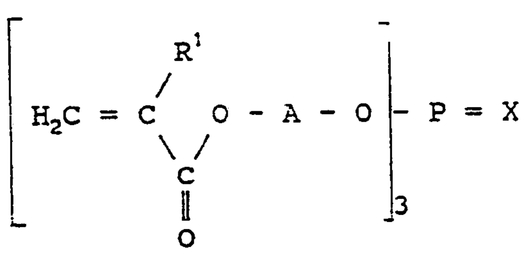

(II)

dans laquelle :

– $R^1$ est choisi parmi l'atome d'hydrogène et le radical méthyle,

– A est choisi parmi les radicaux $(CH_2)_n$ pour lesquels n est un nombre entier de 2 à 12 et le radical -$(CH_2CH_2O)_d$-$CH_2CH_2$-, d étant un nombre entier allant de 1 à 20, et

– X est choisi parmi les atomes de soufre et d'oxygène, et ceux de formule :

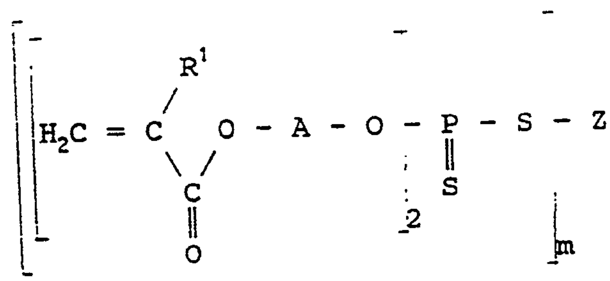

(III)

dans laquelle :

- $R^1$ est choisi parmi l'atome d'hydrogène et le radical méthyle,
- A est choisi parmi les radicaux $(CH_2)_n$ pour lesquels n est un nombre entier de 2 à 12,
- m est un nombre entier allant de 1 à 3, et
- Z est choisi parmi l'atome d'hydrogène, les radicaux $R^2QH$, $R^2$ étant un radical alkyle ayant de 2 à 12 atomes de carbone et Q étant choisi parmi les atomes d'oxygène et de soufre, et les atomes des métaux des groupes IA, IIA, IIIA, IB, IIB, VIB, VIIB et VIII de la Classification Périodique, avec la condition que Z est choisi parmi l'atome d'hydrogène et les radicaux $R^2OH$ lorsque m = 1 et que m est la valence de Z lorsque Z est un métal.

Un second objet de la présente invention consiste en un procédé de préparation des composés acryliques et méthacryliques de formules (I) à (III). Quoique tous ces composés aient en commun pour leur préparation la réaction d'un composé acrylique ou méthacrylique de formule :

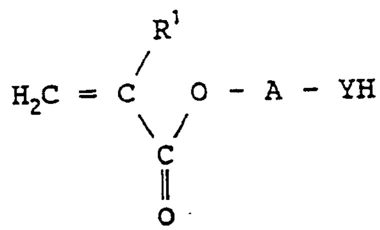

(IV)

dans laquelle $R^1$, A et Y ont les mêmes significations que dans la formule (I), avec un composé pentavalent du phosphore, leur synthèse présente toutefois des particularités selon que l'on prépare des composés de formule (I), de formule (II) ou bien de formule (III) et, parmi ces derniers, selon la nature de Z. C'est pourquoi le procédé de préparation selon l'invention sera maintenant décrit par référence à chacune des familles de composés selon l'invention.

La préparation des composés acryliques et méthacryliques de formule (I) s'effectue en faisant réagir un composé acrylique ou méthacrylique de formule (IV) telle que précisée ci-dessus avec un composé phosphoré de formule :

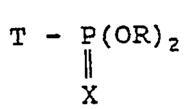

(V)

dans laquelle R et X ont les mêmes significations que dans la formule (I) et T désigne un atome d'halogène. La réaction est de préférence effectuée en présence d'un solvant basique capable de fixer l'halogénure d'hydrogène HT formé. Comme exemples d'un tel solvant on peut citer notamment les amines tertiaires, parmi lesquelles la triéthylamine, la pyridine et la diméthylaniline. La réaction est effectuée de préférence à une température comprise entre 0°C et 80°C environ et, lorsqu'un solvant est présent, ne dépassant pas la température de reflux dudit solvant. La durée de la réaction dépend évidemment de la nature des composés de formules (IV) et (V) ainsi que de la température réactionnelle choisie. Elle est toutefois généralement comprise entre 1 et 20 heures environ. Dans ce mode de réalisation du procédé selon l'invention, on utilise généralement une proportion d'environ 0,7 à 1,3 mole de composé phosphoré pour 1 mole de composé acrylique ou méthacrylique de formule (IV).

Quoique la pression atmosphérique soit généralement satisfaisante, le procédé selon l'invention peut également être mis en oeuvre sous pression réduite, par exemple entre 0,05 et 1 bar environ.

Enfin, la réaction selon l'invention peut être effectuée en présence d'une quantité efficace d'au moins un inhibiteur de polymérisation. Comme exemples d'inhibiteurs de polymérisation utilisables, on peut citer notamment la phénothiazine, l'éther méthylique de l'hydroquinone, la N,N-diéthyl-hydroxylamine, le nitrobenzène, le di-tertiobutylcatéchol, l'hydroquinone, le p-anilinophénol, le phosphite de di-(2-éthylhexyl)-octylphényle, le 2,5-ditertiobutyl-4-hydroxytoluène, le bleu de méthylène et leur mélanges en toutes proportions. Une quantité efficace d'inhibiteur de polymérisation est généralement comprise entre 0,05% et 0,5% en poids de composé acrylique ou méthacrylique.

A l'issue de la réaction, on peut le cas échéant éliminer, par exemple par filtration, le sel formé entre l'halogénure d'hydrogène et le solvant basique. L'isolement et la purification du composé acrylique ou méthacrylique de formule (I) peuvent être effectués par les techniques de synthèse organique bien connues, notamment le lavage à l'eau pour éliminer un éventuel excès du (méth)acrylate hydroxylé de formule (IV), la chromatographie sur colonne de silice pour de petites quantités de produit ou encore la distillation pour des quantités importantes.

Certains des composés phosphorés de formule (V) sont déjà bien connus de l'homme de l'art. Il s'agit notamment de ceux pour lesquels R est un radical alkyle tel que le radical éthyle ou le radical isopropyle. Il n'en va pas de même de ceux pour lesquels R est un groupe $-(CH_2)pSR^3$ dans lequel p et $R^3$ ont les mêmes significations que dans la formule (I). Ces derniers ont été préparés ici pour la première fois afin notamment de servir d'intermédiaires pour la synthèse des composés acryliques et méthacryliques de formule (I).

La préparation des composés phosphorés de formule :

$$T - \underset{\underset{X}{\|}}{P}[O-(CH_2)_p-SR^3]_2 \qquad (VI)$$

dans laquelle T et X ont les mêmes significations que dans la formule (IV), s'effectue par réaction d'un oxyhalogénure ou halogénosulfure de phosphore de formule $PT_3X$ avec un alcool de formule $R^3S(CH_2)pOH$. La réaction est de préférence effectuée en présence d'un solvant ou mélange de solvants dont l'un au moins est de préférence un solvant basique capable de fixer l'halogénure d'hydrogène HT formé. Des exemples de solvants basiques ont été cités précédemment. Comme exemples de solvants miscibles à ceux-ci on peut citer le benzène, le toluène, les xylènes, le dichlorométhane, le chloroforme, l'éther diéthylique, etc. La réaction est effectuée de préférence à une température comprise entre 10°C environ et la température de reflux, sans toutefois dépasser 50°C environ lorsque X est un atome de soufre. La durée de la réaction, variable selon la nature de l'alcool et de l'oxyhalogénure ou halogénosulfure de phosphore, est généralement comprise entre 30 minutes et 4 heures environ. On utilise généralement une proportion de 2 moles environ d'alcool pour 1 mole de composé phosphoré. A l'issue de la réaction, on peut le cas échéant éliminer le sel formé entre l'halogénure d'hydrogène et le solvant basique, par exemple par filtration. La réaction produit généralement, dans la phase organique, un mélange de composés de formule :

$$T_q - \underset{\underset{X}{\|}}{P}-[O-(CH_2)_p-SR^3]_{3-q} \qquad (VII)$$

dans laquelle T, X, p et $R^3$ ont les mêmes significations que dans les formules (I) et (V) et q est un nombre entier allant de 0 à 2, mélange dont le produit majoritaire correspond à q = 1. Ces composés peuvent être séparés par chromatographie sur colonne. Le cas échéant ce mélange peut être utilisé directement pour la préparation des composés acryliques et méthacryliques de formule (I).

La préparation des composés acryliques et méthacryliques de formule (II) s'effectue en faisant réagir un composé acrylique ou méthacrylique de formule (IV) dans laquelle Y est l'oxygène avec un composé de formule $PXT_3$ dans laquelle X a la même signification que dans la formule (II) et T désigne un atome d'halogène. Comme exemples de tels composés on peut citer l'oxychlorure de phosphore $POCl_3$ et le chlorosulfure de phosphore $PSCl_3$. La réaction est de préférence effectuée en présence d'un solvant ou mélange de solvants dont l'un au moins est de préférence un solvant basique capable de fixer l'halogénure d'hydrogène HT formé. Des exemples de solvants basiques ont été cités précédemment. Comme exemples de solvants miscibles à ceux-ci on peut citer le benzène, le toluène, les xylènes, le dichlorométhane, le chloroforme et l'éther diéthylique. La réaction

est effectuée de préférence à une température comprise entre 50°C environ et la température de reflux du (des) solvant(s). La durée de la réaction, variable selon la nature du composé de formule (IV), est généralement comprise entre 1 et 4 heures environ. Pour la mise en oeuvre de la réaction, on utilise généralement une proportion de 0,25 à 1,35 mole environ de composé $PXT_3$ par mole de composé de formule (IV).

Enfin, la réaction selon l'invention peut être effectuée en présence d'une quantité efficace d'au moins un inhibiteur de polymérisation. Comme exemples d'inhibiteurs de polymérisation utilisables, on peut citer notamment la phénothiazine, l'éther méthylique de l'hydroquinone, la N,N-diéthyl-hydroxylamine, le nitrobenzène, le di-tertiobutylcatéchol, l'hydroquinone, le p-anilinophénol, le phosphite de di-(2-éthylhexyl)-octylphényle, le 2,5-ditertiobutyl-4-hydroxytoluène, le bleu de méthylène et leur mélanges en toutes proportions. Une quantité efficace d'inhibiteur de polymérisation est généralement comprise entre 0,05% et 0,5% en poids de composé acrylique ou méthacrylique.

A l'issue de la réaction, le composé acrylique ou méthacrylique de formule (II) est isolé et purifié par filtration sur gel de silice ou bien par chromatographie sur colonne.

La préparation des composés acryliques et méthacryliques de formule (III) pour lesquels m = 1 et Z est l'atome d'hydrogène s'effectue en faisant réagir un composé acrylique ou méthacrylique de formule (IV) avec le pentasulfure de phosphore $P_2S_5$. La réaction est de préférence effectuée en présence d'un solvant tel que benzène, toluène, xylènes, chloroforme. La réaction est effectuée de préférence à une température comprise entre 40°C environ et la température de reflux du solvant. La durée de la réaction, variable selon la nature du composé de formule (IV), est généralement comprise entre 15 minutes et 5 heures environ. Pour la mise en oeuvre de la réaction on utilise généralement une proportion de 0,2 à 0,3 mole environ de pentasulfure de phosphore par mole de composé de formule (IV). A l'issue de la réaction, le composé acrylique ou méthacrylique de formule (III) est isolé par traitement au moyen d'une solution alcaline (soude par exemple), lavage à l'aide d'un solvant organique et régénération par neutralisation au moyen d'un acide minéral (HCl, $H_2SO_4$) dilué.

La préparation des composés acryliques et méthacryliques de formule (III) pour lesquels m = 1 et Z est un radical $R^2QH$ s'effectue en faisant d'abord réagir un composé acrylique ou méthacrylique de formule (III) dans lequel m = 1 et Z est l'atome d'hydrogène, obtenu par exemple tel que décrit précédemment, avec un oxyde ou un sulfure d'alkylène (selon que Q = O ou bien Q = S) de formule générale :

$R^4 - CH - CH_2$ (VIII)
\ /
Q

dans laquelle $R^4$ est choisi parmi l'atome d'hydrogène et les radicaux alkyles, linéaires ou ramifiés, possédant de 1 à 10 atomes de carbone. Quoique cela ne soit pas nécessaire, la réaction peut être mise en oeuvre en présence d'un solvant ou d'un mélange de solvants tels que ceux mentionnés précédemment. La réaction est effectuée de préférence à une température comprise entre -10°C et +40°C environ et en utilisant généralement une proportion de 1 à 1,5 mole environ d'oxyde ou sulfure d'alkylène pour 1 mole de composé acrylique ou méthacrylique (III) de départ. La réaction conduit le plus souvent à la formation d'un mélange de deux isomères dans lesquels la position de la fonction hydroxyle ou thiol varie selon le côté par lequel s'est effectuée l'ouverture du cycle oxiranne ou thiiranne. A l'issue de la réaction, le mélange des isomères est isolé directement, sauf en cas d'utilisation d'un solvant, lequel est alors évaporé.

La préparation des composés acryliques et méthacryliques de formule (III) pour lesquels m est la valence de Z et Z est un atome de métal des groupes IA, IIA, IIIA, IB, IIB, VIB, VIIB et VIII de la Classification Périodique s'effectue en faisant réagir un composé acrylique ou méthacrylique de formule (III) dans lequel m = 1 et Z est l'atome d'hydrogène, obtenu par exemple tel que décrit précédemment, avec un sel minéral de métal Z en milieu aqueux alcalin. Comme exemples de métaux Z on peut citer les métaux alcalins tels que sodium, potassium et lithium, les métaux alcalino-terreux tels que magnésium et calcium, ainsi que l'aluminium, le zinc, le cadmium, le nickel, le cobalt, le fer, le cuivre. Comme milieu alcalin pour la réaction on peut choisir la soude, la potasse ou, de manière générale, toute base minérale forte. Comme exemples de sels minéraux de métal Z on peut citer les halogénures, les oxydes et les sulfates. La réaction est effectuée de préférence à une température comprise entre 20°C et 60°C environ et en utilisant généralement une proportion de 1 à 3 moles environ de composé acrylique ou méthacrylique pour 1 mole de sel minéral du métal Z selon la valence du métal Z. A l'issue de la réaction, dont la durée est généralement comprise entre 15 et 150 minutes environ, le composé métallique acrylique ou méthacrylique de formule (III) est extrait de la solution aqueuse à l'aide d'un solvant organique tel que le dichlorométhane, le chloroforme, etc.

Enfin un troisième et dernier objet de la présente invention consiste en l'application des nouveaux composés acryliques et méthacryliques décrits précédemment à la constitution de nouveaux polymères et copolymères. Plus précisément la présente invention concerne des polymères et copolymères comprenant au moins un motif dérivé d'au moins un composé acrylique ou méthacrylique de formule (I), de formule (II) ou de formule (III). De tels (co)polymères peuvent en outre comprendre au moins un motif dérivé d'au moins un comonomère copolymérisable avec ledit composé acrylique ou méthacrylique de formule (I), de formule (II) ou de formule (III), tel que par exemple :

- un acrylate ou méthacrylate d'alkyle dont le groupe alkyle linéaire ou ramifié, le cas échéant substitué, par exemple par au moins un atome d'halogène comme le chlore ou le fluor et/ou par au moins un groupe hydroxyle, possède de 1 à 20 atomes de carbone,
- un acrylate ou méthacrylate d'aryle tel que le méthacrylate de benzyle,
- un hydrocarbure vinylaromatique tel que le styrène, le vinyltoluène, l'alphaméthylstyrène, le méthyl-4 styrène, le méthyl-3 styrène, le méthoxy-4 styrène, l'hydroxyméthyl-2 styrène, l'éthyl-4 styrène, l'éthoxy-4 styrène, le diméthyl-3,4 styrène, le chloro-2 styrène, le chloro-3 styrène, le chloro-4 méthyl-3 styrène, le tert.-butyl-3 styrène, le dichloro-2,4 styrène, le dichloro-2,6 styrène et le vinyl-1 naphtalène,
- un nitrile insaturé tel que l'acrylonitrile ou le méthacrylonitrile,
- une maléimide N-substituée telle que la N-éthylmaléimide, la N-isopropylmaléimide, la N-n-butylmaléimide, la N-isobutylmaléimide, la N-terbutylmaléimide, la N-n-octylmaléimide, la N-cyclohexylmaléimide, la N-benzylmaléimide et la N-phénylmaléimide,
- un anhydride d'acide dicarboxylique insaturé tel que l'anhydride maléique, l'anhydride itaconique, l'anhydride citraconique ou l'anhydride tétrahydrophtalique,
- l'acide acrylique ou méthacrylique,
- un acrylate ou méthacrylate de polyol comme les diacrylates et diméthacrylates de l'éthylèneglycol, du propylèneglycol, du 1,3-butanediol, du 1,4-butanediol, du 1,6-hexane-diol, du néopentylglycol, du 1,4-cyclohexane-diol, du 1,4-cyclohexanediméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylèneglycol, du tétrapropylèneglycol, du triméthyloléthane, du triméthylolpropane, du glycérol, du pentaérythritol, les triacrylates et triméthacrylates du triméthyloléthane, du triméthylolpropane, du glycérol, du pentaérythritol, les tétraacrylates et tétraméthacrylates du pentaérythritol, les di(méth)acrylates à hexa(méth)acrylates du dipentaérythritol, les poly(méth)acrylates de polyols mono- ou polyéthoxylés ou mono- ou polypropoxylés tels le triacrylate et le triméthacrylate du triméthylolpropane triéthoxylé, du triméthylolpropane tripropoxylé ; le triacrylate et le triméthacrylate du glycérol tripropoxylé ; le triacrylate, le triméthacrylate, le tétraacrylate et le tétraméthacrylate du pentaérythritol tétraéthoxylé,
- un acrylate ou méthacrylate époxydé choisi parmi le 2-époxyéthylbicyclo[2.2.1]hept-5(6)-yl (méth)-acrylate, l'acrylate d'époxy(dicyclopentyloxy)éthyle ainsi que ceux de formule :

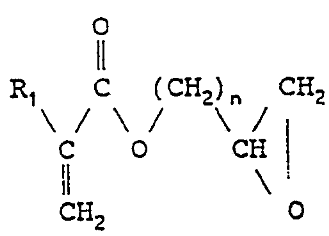

(IX)

dans laquelle $R_1$ est choisi parmi l'atome d'hydrogène et le radical méthyle, et n est un nombre entier allant de 1 à 16, ceux de formule :

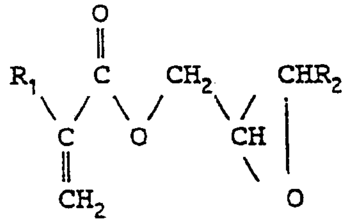

(X)

dans laquelle $R_1$ est choisi parmi l'atome d'hydrogène et le radical méthyle, et $R_2$ est choisi parmi les radicaux alkyle ayant de 1 à 12 atomes de carbone et les radicaux aryle ayant de 6 à 12 atomes de carbone, et ceux

de formules :

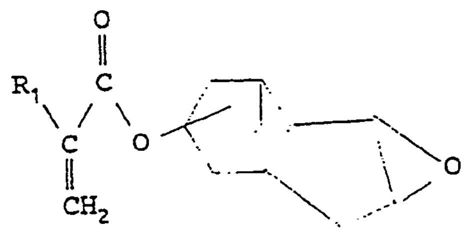

(XI)

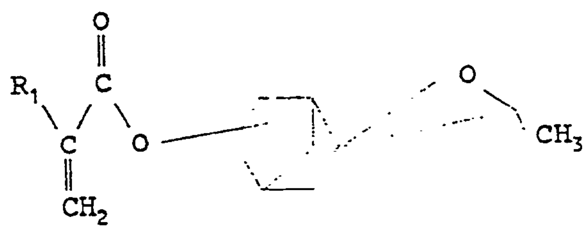

(XII)

dans lesquelles $R_1$ est choisi parmi l'atome d'hydrogène et le radical méthyle,

- un acrylamide ou méthacrylamide, un acrylate ou méthacrylate de dialkylaminoalkyle et leurs sels quaternaires,
- l'acrylate et le méthacrylate de (norbornyloxy-2)-2 éthyle et Tape 2 de (diméthanodécahydronaphtyloxy-2)-2 éthyle, et
- des oxazolidones acryliques et méthacryliques choisies parmi celles de formule :

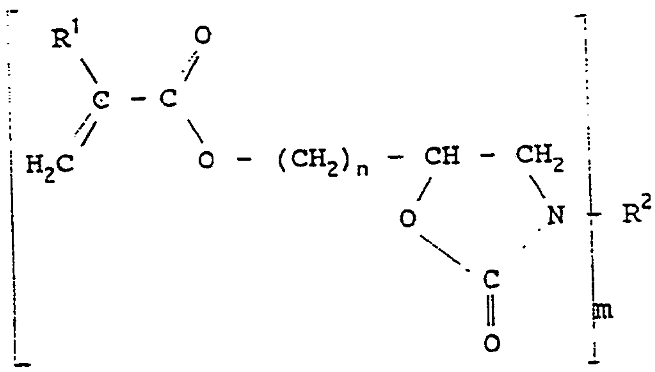

(XIII)

et celles de formule :

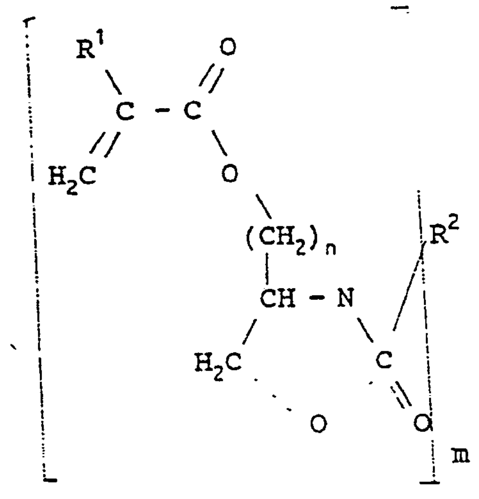

(XIV)

formules dans lesquelles :

– $R^1$ est choisi parmi l'atome d'hydrogène et le radical méthyle,

– n est un nombre entier allant de 1 à 12,

– m est un nombre entier allant de 1 à 3, et

– $R^2$ est un radical hydrocarboné, alkyle linéaire, ramifié ou cyclique ou bien aromatique, possédant de 5 à 12 atomes de carbone,

lesdites oxazolidones pouvant être obtenues par réaction, entre 30°C et 90°C, d'un composé portant une fonction (méth)acrylique avec un composé portant au moins une fonction isocyanate.

De tels polymères et copolymères sont obtenus en (co)polymérisant au moins un composé acrylique ou méthacrylique de formule (I), de formule (II) ou de formule (III) et le cas échéant au moins un comonomère copolymérisable, tel que défini précédemment, en présence d'au moins un initiateur de radicaux libres tel qu'un peroxyde, un hydroperoxyde ou un composé diazo. La (co)polymérisation est généralement effectuée à une température comprise entre 50°C et 120°C environ et en utilisant l'un des monomères comme solvant. Elle peut également s'effectuer en émulsion dans l'eau, à une température comprise entre 50°C environ et 100°C, en présence d'au moins un agent tensio-actif.

Les exemples suivants illustrent la présente invention sans intention limitative.

## EXEMPLES 1 à 4

Dans un tricol muni d'un réfrigérant, d'un thermomètre, d'une ampoule à brome et équipé d'une agitation magnétique, on introduit 0,1 mole de $PXCl_3$ (X = O, S) diluée dans 30 ml de benzène.

A 5°C on ajoute, goutte à goutte, 0,2 mole d'alcool soufré de formule $(CH_3)_3C-S-(CH_2)_p-OH$ dilué dans 10 ml de benzène et 0,2 mole de pyridine.

A la fin de l'addition on laisse revenir a température ambiante puis on chauffe [à reflux si X = O ; à 50°C si X = S] durant 1 heure.

Le sel de pyridinium est éliminé par filtration et le filtrat lavé à l'eau glacée.

La phase organique est séchée sur sulfate de sodium puis concentrée.

Le produit majoritaire obtenu, de formule

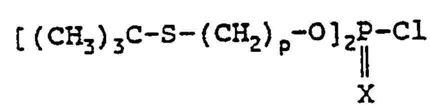

a été caractérisé par résonance magnétique nucléaire (RMN) du proton au moyen d'un spectromètre JEOL PMX 60 SI.

Tous les spectres obtenus comportent un déplacement chimique à 1,3 ppm (s, 18H). Ils comportent en outre, variable d'un produit à l'autre, des déplacements chimiques (exprimés en ppm) dont les caractéristiques sont mentionnées au tableau I ci-après. Celui-ci rassemble, en fonction de la valeur de p et de la signification de X, d'une part le rendement R de la réaction (exprimé en pourcentage par rapport à l'alcool soufré) et d'autre part les données du spectre de RMN.

TABLEAU I

| Exemple | p | X | R | RMN $^1H$ $\delta(CH_2O)$ | $\delta(CH_2S)$ | $\delta(CH_2)$ |
|---|---|---|---|---|---|---|
| 1 | 3 | S | 70 | 4,3 (m,4H) | 2,6 (m,4H) | 2,0 (m,4H) |
| 2 | 3 | O | 70 | 4,3 (m,4H) | 2,6 (m,4H) | 2,0 (m,4H) |
| 3 | 6 | S | 65 | 4,2 (m,4H) | 2,5 (m,4H) | 1,3 à 2,1 (m,16H) |
| 4 | 6 | O | 75 | 4,2 (m,4H) | 2,5 (m,4H) | 1,3 à 2,1 (m,16H) |

Par ailleurs, le produit de l'exemple 2 a été caractérisé par résonance magnétique nucléaire du phosphore 31 avec découplage des protons, la référence étant l'acide phosphorique. Obtenu sur un spectromètre BRUCKER 80 MHz, le spectre révèle un déplacement chimique à 4,6 ppm.

EXEMPLES 5 à 13

Dans un réacteur muni d'un réfrigérant, d'un thermomètre, d'une ampoule à brome et équipé d'une agitation magnétique, on introduit 10 mmoles de (méth)acrylate hydroxylé et 10 mmoles de pyridine. A 15°C, on ajoute, goutte à goutte, 10 mmoles du chlorure $(RO)_2P(X)Cl$. On laisse revenir à température ambiante et l'on continue l'agitation durant 18 heures. On ajoute alors au mélange réactionnel 10 ml d'éther anhydre puis on élimine le sel de pyridinium. Après élimination de l'éther à l'évaporateur rotatif on obtient un liquide incolore.

Le produit isolé est alors purifié par lavages à l'eau, pour éliminer l'excès éventuel de (méth)acrylate hydroxylé, et/ou par chromatographie sur colonne de silice. Le rendement en (thio)phosphore (méth)acrylate, exprimé par rapport au chlorure de phosphoryle, est au moins égal à 95% dans chaque cas.

Le méthacrylate hydroxylé utilisé pour cette synthèse est conforme à la formule (IV) avec respectivement les significations suivantes :

– A = $-(CH_2)_2-$ (exemples 5 à 11)

– A = $-(CH_2)_3-$ (exemples 12 et 13)

Le chlorure d'acide phosphorique utilisé pour cette synthèse est conforme à la formule (V), les significations de R et X figurant au tableau II ci-après. Les (thio)phosphates (méth)acryliques obtenus ont été caractérisés par résonance magnétique nucléaire du proton au moyen d'un spectromètre JEOL PMX 60 SI. Tous les spectres obtenus comportent des déplacements chimiques à 6,1 ppm (m, 1H), 5,6 ppm (m, 1H), 2,0 ppm (m, 3H) et, lorsque R est un radical soufré (exemples 9 à 13), à 2,6 ppm (m, 4H). Ils comportent en outre, variables d'un produit à l'autre, des déplacements chimiques (exprimés en ppm) dont les caractéristiques sont mentionnées au tableau II.

TABLEAU II

| Exemple | X | R | RMN $^1H$ $\delta(CH_2O)$ | $\delta(CH_2S)$ | $\delta(CH_2)$ |
|---|---|---|---|---|---|
| 5 | O | $C_2H_5$ | 4,0 à 4,4 (m,8H) | | 1,3 (t,6H) |
| 6 | S | $C_2H_5$ | 4,0 à 4,4 (m,8H) | | 1,3 (t,6H) |
| 7 | O | $CH(CH_3)_2$ | 4,3 (m,4H) 4,6 (m,2H) | | 1,3 (d,12H) |
| 8 | S | $CH(CH_3)_2$ | 4,3 (m,4H) 4,6 (m,2H) | | 1,3 (d,12H) |
| 9 | S | $(CH_2)_3SC(CH_3)_3$ | 4,0 à 4,4 (m,8H) | 2,0 (m,4H) | 1,3 (s,18H) |
| 10 | O | $(CH_2)_6SC(CH_3)_3$ | 4,0 à 4,4 (m,8H) | 1,3 à 2,1 (m,16H) | 1,3 (s,18H) |
| 11 | S | $(CH_2)_6SC(CH_3)_3$ | 4,0 à 4,4 (m,8H) | 1,3 à 2,1 (m,16H) | 1,3 (s,18H) |
| 12 | O | $(CH_2)_3SC(CH_3)_3$ | 4,0 à 4,4 (m,8H) | 2,0 (m,6H) | 1,3 (s,18H) |
| 13 | S | $(CH_2)_3SC(CH_3)_3$ | 4,0 à 4,4 (m,8H) | 2,0 (m,6H) | 1,3 (s,18H) |

EXEMPLES 14 et 15

Dans un réacteur muni d'un réfrigérant, d'un thermomètre, d'une ampoule à brome et équipé d'une agitation magnétique, on introduit sous atmosphère d'azote 0,1 mole d'oxychlorure de phosphore $POCl_3$ diluée dans 30 ml de benzène. A 5°C on ajoute, goutte à goutte, 0,35 mole d'acrylate de 2-hydroxyéthyle (exemple 14) ou de méthacrylate de 2-hydroxyéthyle (exemple 15), 0,35 mole de pyridine et 15 ml de benzène. A la fin de l'addition, on chauffe à 60°C pendant 2 heures. Le sel de pyridinium est éliminé par filtration et le filtrat lavé à l'eau glacée. La phase organique est séchée sur sulfate de sodium puis concentrée. On obtient ainsi un rendement de 45% (par rapport à l'oxychlorure de phosphore) des liquides huileux jaunâtres correspondant aux produits de formule (II) dans laquelle n = 2, X est l'oxygène et $R^1$ est l'hydrogène (exemple 14) ou bien le radical méthyle (exemple 15). Ces produits ont été caractérisés par résonance magnétique nucléaire du phosphore 31 dans les mêmes conditions que celui de l'exemple 4. Les spectres obtenus révèlent un déplacement chimique à -1,75 ppm par rapport à l'acide phosphorique.

EXEMPLES 16 à 18

Dans un réacteur muni d'un réfrigérant, d'un thermomètre, d'une ampoule à brome et équipé d'une agitation magnétique, on introduit sous atmosphère d'azote, à la température de 20°C, 0,12 mole de méthacrylate hydroxylé et 100 ml de benzène. On chauffe le mélange à reflux puis on ajoute 0,03 mole de pentasulfure de phosphore $P_2S_5$. A la fin de l'addition on poursuit le chauffage à 80°C jusqu'à disparition totale de $P_2S_5$ (30

minutes pour les exemples 17 et 18, 2 heures pour l'exemple 16). Après évaporation du solvant, on obtient avec un rendement de 100%, par rapport au méthacrylate hydroxylé, sous forme de liquides jaunes clairs, les composés de formule :

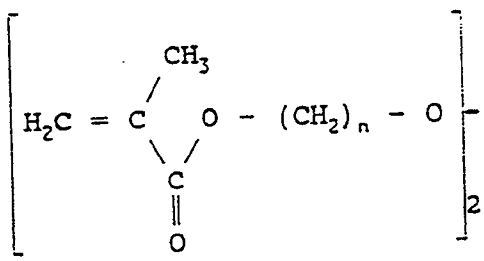

(III-a)

Les méthacrylates hydroxylés utilisés sont les suivants :
- méthacrylate de 2-hydroxyéthyle (n = 2) à l'exemple 16.
- méthacrylate de 3-hydroxypropyle (n = 3) à l'exemple 17.
- méthacrylate de 6-hydroxyhexyle (n = 6) à l'exemple 18.

Les composés de formule (III-a) obtenus ont été caractérisés par résonance magnétique nucléaire du proton au moyen d'un spectromètre JEOL PMX 60 SI. Tous les spectres obtenus comportent des déplacements chimiques à 6,1 ppm (m, 2H), 5,55 ppm (m, 2H), 2,0 ppm (m, 6H). Ils comportent en outre, variables d'un produit à l'autre, des déplacements chimiques (exprimés en ppm) dont les valeurs sont mentionnées dans le Tableau III.

TABLEAU III

| Exemple | n | $\delta(CH_2-O)$ | $\delta(CH_2)$ | $\delta(SH)$ |
|---|---|---|---|---|
| 18 | 2 | 4,3(m, 8H) | | 3,0(s, 1H) |
| 19 | 3 | 4,3(m, 8H) | 1,4 à 2,1 (m, 4H) | 3,1(s, 1H) |
| 20 | 6 | 4,2(m, 8H) | 1,4 à 2,1 (m, 16H) | 3,0(s, 1H) |

EXEMPLES 19 à 21

Dans un réacteur équipé d'une agitation magnétique on introduit 0,2 mole d'une composé obtenu à l'un des exemples 16 à 18, puis 0,22 mole de soude aqueuse (0,7 N), puis on porte le mélange à 40°C et on ajoute 0,11 mole de sulfate de zinc en solution aqueuse et on poursuit le chauffage pendant 1 heure. Le mélange est extrait au dichlorométhane et le produit est isolé par évaporation du solvant. On obtient, avec le rendement R indiqué au tableau IV ci-après, sous forme d'huile épaisse jaune, les composés de formule :

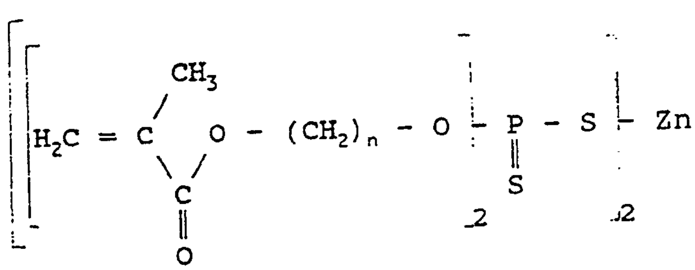

(III-b)

Ces composés ont été caractérisés par résonance magnétique nucléaire du proton au moyen d'un spectromètre JEOL PMX 60 SI.

Tous les spectres obtenus comportent des déplacements chimiques à 6,1 ppm (m, 4H), 5,6 ppm (m, 4H), 4,3 ppm (m, 16H) et 2,0 ppm (m, 12H). Ils comportent en outre, variable d'un produit à l'autre, un déplacement chimique exprimé en ppm et mentionné au tableau IV. Ces produits ont aussi été caractérisés par résonance magnétique nucléaire du phosphore 31 dans les mêmes conditions que ceux de l'Exemple 4. Les déplacements chimiques (exprimés en ppm) par rapport à $H_3PO_4$ sont indiqués au Tableau IV.

TABLEAU IV

| Exemple | n | R | $\delta(CH_2)$ | $RMN^{31}P$ |
|---|---|---|---|---|
| 19 | 2 | 95 | | 96,4 |
| 20 | 3 | 73 | 2,2 (m, 8H) | 96,0 |
| 21 | 6 | 90 | 1,3 à 2,3 (m, 32H) | 96,3 |

EXEMPLES 22 à 24

Dans un réacteur muni d'un réfrigérant, d'un thermomètre, d'une ampoule à brome et équipé d'une agitation magnétique on introduit à 0°C 0,1 mole d'un composé obtenu à l'un des exemples 18 à 20 et 0,11 mole d'oxyde de propylène, puis on porte la température à 23°C et on laisse réagir pendant deux heures. On obtient avec un rendement de 100% les composés de formule :

(III-c) 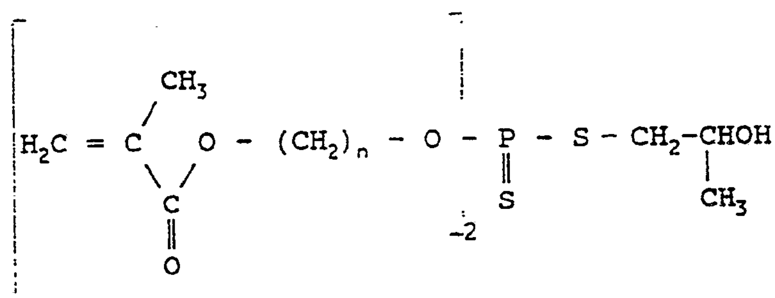

et

(III-d) 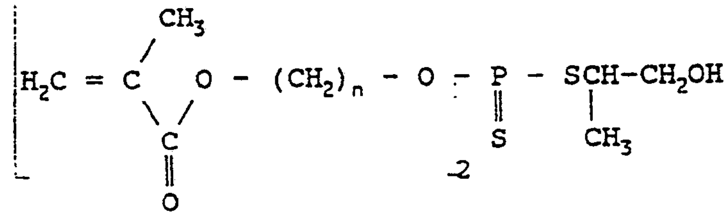

dont le mélange a été caractérisé par résonance magnétique nucléaire du proton au moyen d'un spectromètre JEOL PMX 60 SI.

Tous les spectres obtenus comportent des déplacements chimiques à 6,1 ppm (m, 2H), 5,6 ppm (m, 2H), 4,3 ppm (m, 9H), 2,7 ppm (s), 2,8 à 3,3 ppm (m, 2H), 2,0 ppm (m, 6H) et 1,3 ppm (d, 3H). Ils comportent en outre, variable d'un produit à l'autre, un déplacement chimique (exprimé en ppm) tel que mentionné au Tableau

V.

TABLEAU V

| Exemple | n | δ($CH_2$) | RMN$^{31}$P (III-c) | RMN$^{31}$P (III-d) |
|---|---|---|---|---|
| 22 | 2 | | 97,4 | 96,4 |
| 23 | 3 | 2,1 (m, 4H) | 96,1 | 95,6 |
| 24 | 6 | 1,3 à 2,2 (m, 16H) | 95,8 | 95,4 |

Ces composés ont également été caractérisés par résonance magnétique nucléaire du phosphore 31 dans les mêmes conditions que ceux de l'Exemple 4. Les spectres permettent de déterminer des proportions de 85% de l'isomère (III-c) et 15% de l'isomère (III-d). Les déplacements chimiques observés pour chacun des isomères et exprimés en ppm sont indiqués au Tableau V.

## Revendications

1 - Composés acryliques et méthacryliques choisis parmi ceux de formule :

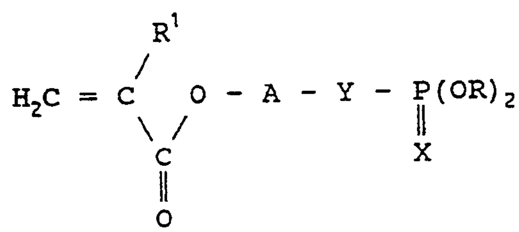

(I)

dans laquelle :

– $R^1$ est choisi parmi l'atome d'hydrogène et le radical méthyle,

– A est choisi parmi les radicaux $(CH_2)_n$ pour lesquels n est un nombre entier de 2 à 12 et le radical -$(CH_2CH_2O)_d$-$CH_2CH_2$-, d étant un nombre entier allant de 1 à 20,

– X est choisi parmi les atomes de soufre et d'oxygène,

– Y est choisi parmi les atomes de soufre et d'oxygène,

avec la condition que X est un atome de soufre et Y est un atome d'oxygène lorsque A est le radical -$(CH_2CH_2O)_d$-$CH_2CH_2$-, et

– R est choisi parmi les radicaux alkyle ayant de 1 à 20 atomes de carbone et les groupes -$(CH_2)_pSR^3$ dans lesquels p est un nombre entier allant de 3 à 12 et $R^3$ est un radical alkyle ayant de 1 à 20 atomes de carbone,

ceux de formule :

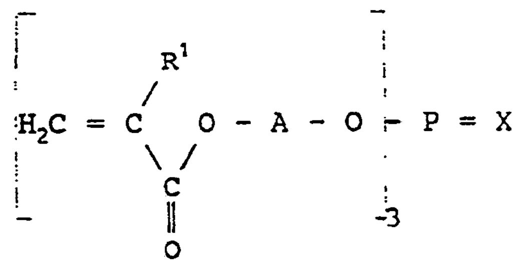

(II)

dans laquelle :

– $R^1$ est choisi parmi l'atome d'hydrogène et le radical méthyle,

– A est choisi parmi les radicaux $(CH_2)_n$ pour lesquels n est un nombre entier de 2 à 12 et le radical -$(CH_2CH_2O)_d$-$CH_2CH_2$-, d étant un nombre entier allant de 1 à 20, et

– X est choisi parmi les atomes de soufre et d'oxygène,

et ceux de formule :

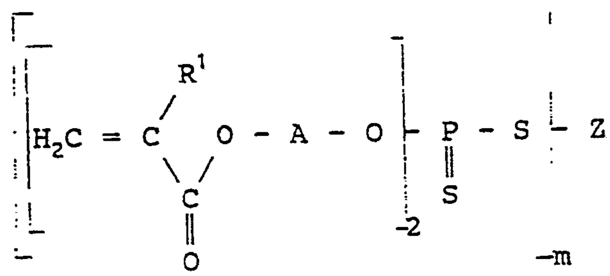

(III)

dans laquelle :

– $R^1$ est choisi parmi l'atome d'hydrogène et le radical méthyle,

– A est choisi parmi les radicaux $(CH_2)_n$ pour lesquels n est un nombre entier de 2 à 12,

– m est un nombre entier allant de 1 à 3, et

– Z est choisi parmi l'atome d'hydrogène, les radicaux $R^2QH$, $R^2$ étant un radical alkyle ayant de 2 à 12 atomes de carbone et Q étant choisi parmi les atomes d'oxygène et de soufre, et les atomes des métaux des groupes IA, IIA, IIIA, IB, IIB, VIB, VIIB et VIII de la Classification Périodique, avec la condition que Z est choisi parmi l'atome d'hydrogène et les radicaux $R^2OH$ lorsque m = 1 et que m est la valence de Z lorsque Z est un métal.

**2** - Procédé de préparation des composés selon la revendication 1, caractérisé en ce qu'il comprend la réaction d'un composé acrylique ou méthacrylique de formule :

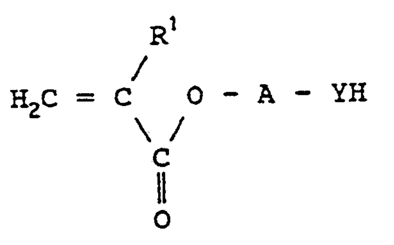

(IV)

dans laquelle $R^1$, A et Y ont les mêmes significations que dans la formule (I), avec un composé pentavalent du phosphore.

**3** - Procédé selon la revendication 2, pour la préparation de composés acryliques et méthacryliques de formule (I), caractérisé en ce que le composé pentavalent du phosphore a pour formule :

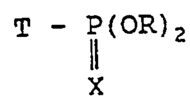

(V)

dans laquelle R et X ont les mêmes significations que dans la formule (I) et T désigne un atome d'halogène.

**4** - Composés phosphorés de formule :

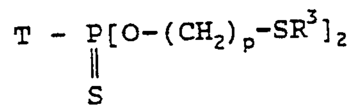

(VI)

dans laquelle T désigne un atome d'halogène, p est un nombre entier allant de 2 à 12 et $R^3$ est un radical alkyle ayant de 1 à 20 atomes de carbone.

**5** - Procédé selon la revendication 2 pour la préparation de composés acryliques et méthacryliques de formule (II), caractérisé en ce qu'on fait réagir un composé acrylique ou méthacrylique de formule (IV) dans laquelle Y est l'oxygène avec un composé de formule $PXT_3$ dans laquelle X a la même signification que dans la formule (II) et T désigne un atome d'halogène.

**6** - Procédé selon la revendication 2 pour la préparation de composés acryliques et méthacryliques de formule (III) pour lesquels m = 1 et Z est l'atome d'hydrogène, caractérisé en ce que le composé pentavalent du phosphore est le pentasulfure de phosphore.

**7** - Procédé selon la revendication 2 pour la préparation des composés acryliques et méthacryliques de formule (III) pour lesquels m = 1 et Z est un radical $R^2QH$, caractérisé en ce qu'il comprend d'abord la réaction d'un composé de formule (IV) avec le pentasulfure de phosphore, puis la réaction du composé obtenu dans cette première étape avec un oxyde ou un sulfure d'alkylène (selon que Q = O ou bien Q = S) de formule générale :

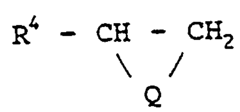

(VIII)

dans laquelle $R^4$ est choisi parmi l'atome d'hydrogène et les radicaux alkyles, linéaires ou ramifiés, possédant de 1 à 10 atomes de carbone.

**8** - Procédé selon la revendication 2 pour la préparation de composés acryliques et méthacryliques de formule (III) pour lesquels m est la valence de Z et Z est un atome de métal, caractérisé en ce qu'il comprend d'abord la réaction d'un composé de formule (IV) avec le pentasulfure de phosphore, puis la réaction du composé obtenu dans cette première étape avec un sel minéral de métal Z en milieu alcalin.

**9** - Polymères et copolymères comprenant au moins un motif dérivé d'au moins un composé acrylique ou méthacrylique de formule (I), de formule (II) ou de formule (III).

**10** - Procédé de préparation de composés phosphorés selon la revendication 4, caractérisé en ce qu'il comprend la réaction d'un oxyhalogénure ou halogénosulfure de phosphore de formule $PT_3X$ avec un alcool de formule $R^3S(CH_2)_pOH$.

Office européen des brevets

# RAPPORT DE RECHERCHE EUROPEENNE

Numero de la demande

EP 91 40 1516

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 991 230 (R.A. DICKIE)<br>* Revendications *<br>--- | 1 | C 07 F 9/09<br>C 08 K 5/49<br>C 07 F 9/165 |
| A | DERWENT JAPANESE PATENTS REPORT, vol. 6, no. 4, 26 janvier 1967 - 1 février 1967, page 3, résumé no. 1743/67, Derwent Publications Ltd, Londres, GB; & JP-B-67 001 743 (HOKUKO KAGAKU KOGYO K.K.) 26-01-1967<br>--- | 4 | |
| A | US-A-4 581 180 (M. YOKOSHIMA)<br>* En entier *<br>----- | 1,9,10 | |
| | | | **DOMAINES TECHNIQUES RECHERCHES (Int. Cl.5)** |
| | | | C 07 F 9/00<br>C 08 K 5/00 |

Le présent rapport a été établi pour toutes les revendications

| Lieu de la recherche | Date d'achèvement de la recherche | Examinateur |
|---|---|---|
| LA HAYE | 09-09-1991 | OUSSET J-B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)